# EUROPEAN PATENT APPLICATION

(11) **EP 4 811 534 A1**
(43) Date of publication of application: **23.09.2026**
(21) Application number: 25822334.6
(22) Date of filing: 05.06.2025
(51) Int. Cl.: H01M 50/567, H01M 50/186, H01M 50/559, H01M 50/107, H01M 10/04

(54) **BATTERY CELL AND MANUFACTURING METHOD THEREOF**

(30) Priority: 14.06.2024 KR 20240077835; 20.05.2025 KR 20250065311
(71) Applicant: LG Energy Solution, Ltd., Seoul 07335 (KR)
(72) Inventor: CHAE, Sanghak, Daejeon 34122 (KR)
(74) Representative: Goddar, Heinz J.
(86) International application number: PCT/KR2025/007759
(87) International publication number: WO 2025/258925

(57) **Abstract**

Disclosed are a battery cell and a method for manufacturing a battery cell according to the present invention. The battery cell of the present invention includes a restraining tapped portion provided in a circumferential direction on an inner circumferential surface of a rivet hole of a can housing; a gasket fitted into the rivet hole and in contact with the inner circumferential surface of the rivet hole; and a rivet terminal having a screw thread on an outer circumferential surface thereof, wherein the screw thread is inserted into the rivet hole with the gasket interposed therebetween.

## Description

### [TECHNICAL FIELD]

This application claims the benefit of priority based on Korean Patent Application No. 10-2024-0077835 filed on June 14, 2024 and Korean Patent Application No. 10-2025-0065311 filed on May 20, 2025, entire content disclosed in the document of the patent applications is included as a part of this specification.

The present invention relates to a battery cell and a manufacturing method thereof capable of significantly increasing the bonding strength and structural rigidity of a rivet terminal and preventing the rivet terminal from being ejected or detached from a rivet hole when thermal runaway occurs.

### [BACKGROUND ART]

Generally, a cylindrical battery cell includes a can housing and an electrode assembly. The can housing is manufactured by subjecting a metal sheet to deep-drawing to form a circular bottom and a circular tubular side wall connected thereto. The can housing includes an open end, which may be provided at an axial end facing the bottom. The open end may be sealed by a cap plate. The electrode assembly is accommodated in the can housing of the cylindrical battery cell. The bottom of the can housing may be electrically connected to an electrode tab of a cathode, and the cap plate may be electrically connected to an electrode tab of an anode. Accordingly, the can housing may serve as a cathode, and the cap plate may serve as an anode.

Recently, a cylindrical battery cell with a novel structure is being developed. The battery cell with the novel structure may include a beading crimping region where a cap plate is mounted and a rivet region including an anode terminal. The beading crimping region may be provided at the open end of the side wall of the can housing, and the rivet region may be provided at the bottom. A cap plate may be installed in the beading crimping region, and a rivet terminal may be installed in the rivet region. The beading crimping region may include a beading and a crimped portion.

The rivet terminal may be fixedly installed in a terminal hole (rivet hole) provided in the rivet region. An insulating gasket may be interposed between the rivet terminal and the terminal hole of the can housing, and the insulating gasket electrically insulates the can housing and the rivet terminal. A cathode current collecting plate and an anode current collecting plate are welded to the cathode electrode tab and anode electrode tab provided at the two axial ends of the electrode assembly, respectively. The cathode current collecting plate may be electrically connected to the beading, and the anode current collecting plate may be electrically connected to the rivet terminal. Accordingly, the can housing may serve as a cathode, and the rivet terminal may serve as an anode. To electrically insulate the can housing and the rivet terminal, which have different polarities, an insulating gasket is interposed between the terminal hole of the can housing and the rivet terminal.

The cap plate is press-fitted between the beading and the crimped portion to seal the open end. An insulating material is interposed between the cap plate and the can housing, and the cap plate may be electrically insulated from the can housing. Meanwhile, the can housing may include a vent for discharging internal gas to the outside. The vent may be positioned adjacent to the open end of the can housing. For example, the vent may be provided in the cap plate.

When thermal runaway of a battery cell occurs or a side rupture test is performed, the insulating gasket may melt due to high-temperature heat. When the insulating gasket softens or melts, the rivet terminal may be ejected or detached from the terminal hole of the can housing, damaging the anode terminal (rivet terminal). The outer circumferential surface of a conventional rivet terminal is formed as a smooth surface, which may facilitate ejection or detachment from the terminal hole of the can housing.

In addition, a battery pack or battery module may be manufactured by electrically connecting a plurality of battery cells by welding tabs to the rivet terminals of the battery cells. When the rivet terminals are ejected or detached from the can housing due to thermal runaway, the tabs connecting the plurality of rivet terminals may be damaged, potentially leading to damage to the battery pack or battery module. To prevent damage to the battery pack or battery module, the bonding strength between the rivet terminals and the can housing must be enhanced.

In addition, the rivet terminals and vents of the battery cells are provided at the bottom and open ends of the can housing, respectively. In the battery pack or battery module, the rivet terminals of the cylindrical battery cells may be positioned at the top, and the vents at the bottom. In such battery packs or battery modules, structures to prevent internal gas discharge are concentrated at the bottom of the battery pack or battery module. For example, these structures may include a vent that discharges internal gas to the outside of the battery pack, a gas detection sensor, a blower fan, or a cooling module. However, when the rivet terminal located on the upper side of the battery pack is destroyed due to thermal runaway of the battery pack, causing internal gas to be discharged through the rivet hole, the structure provided on the lower side of the battery pack to prevent internal gas discharge may not be sufficiently protected against gas discharge originating from the upper side of the battery pack, thereby further increasing the risk of fire or explosion. Accordingly, there is a growing need for enhancing the bonding strength and structural rigidity of the rivet terminal in cylindrical battery cells.

The background art of the present invention is disclosed in Korean Patent Application Publication No. 2022-0113654 (published on August 16, 2022, titled "Fixing structure of Electrode terminal, and battery, battery pack and vehicle including the same").

### [DISCLOSURE]

### [TECHNICAL PROBLEM]

In order to solve the above-described problems, it is an object of the present invention to provide a battery cell and a manufacturing method thereof capable of significantly increasing the bonding strength and structural rigidity between the rivet terminal and the rivet hole.

It is an object of the present invention to provide a battery cell and a manufacturing method thereof capable of preventing the rivet terminal from being ejected or detached from the rivet hole when thermal runaway occurs.

The technical problems to be solved by the present invention are not limited to the objects described above, and other objects and advantages of the present invention that are not described may be understood through the following description and will be more clearly understood by the examples of the present invention. In addition, it is apparent that the objects and advantages of the present invention may be embodied by the means and combinations thereof indicated in the claims.

### [TECHNICAL SOLUTION]

A cylindrical battery cell includes a jelly-roll shaped electrode assembly and a housing that accommodates the electrode assembly.

A winding equipment may wind a first electrode and a second electrode with a separator interposed therebetween to manufacture the jelly-roll shaped electrode assembly.

One of the first electrode and the second electrode may be an anode, and the other may be a cathode.

The housing may include a side wall extending in an axial direction, one end wall formed radially at one axial end of the side wall, and an open end provided at the opposite axial end of the side wall.

The one end wall may include a bottom or a bottom member.

The housing may include a can housing made of a metal material.

The one end wall may include a terminal hole perforating therethrough in the axial direction.

An electrode terminal may be inserted into and fixedly installed in the terminal hole.

The terminal hole may include a rivet hole.

The electrode terminal may include a rivet terminal.

A beading may be provided at the opposite axial end of the side wall.

The beading equipment may form the beading by plastically forming the opposite axial end of the side wall into a concave shape by pressing the same radially inward.

One of the first electrode and the second electrode may be electrically connected to the electrode terminal, and the other electrode may be electrically connected to the beading.

The first electrode and the electrode terminal may be electrically connected by electrically connecting the first electrode to the first current collecting plate, and electrically connecting the first current collecting plate to the electrode terminal.

The second electrode and the beading may be electrically connected by electrically connecting the second electrode to the second current collecting plate, and electrically connecting the second current collecting plate to the beading.

The current collecting plate may be electrically connected and fixed to the electrode by a method including laser welding, thermal welding and ultrasonic welding.

The electrode terminal or the beading may be electrically connected to the current collecting plate by a method including laser welding, thermal welding and ultrasonic welding.

The beading is electrically connected to the second electrode, and the side wall of the can housing and the one end wall may be electrically connected to the second electrode. Accordingly, the electrode terminal and the one end wall may have different polarities.

An insulator may be provided between the one end wall and the electrode terminal, electrically insulating the one end wall and the electrode terminal.

The insulator may include a gasket.

The one end wall may be electrically insulated from the electrode assembly.

An electrical insulator may be interposed between the one end wall and the electrode assembly.

The open end of the housing may be sealed with a cap plate.

The opposite axial end of the side wall may be caulked radially inward and may include a crimped portion.

The cap plate may be fixed by being press-fitted between the beading and the crimped portion in the axial direction.

The cap plate may be electrically insulated from the housing.

An electrical insulator may be interposed between the cap plate and the housing.

The electrical insulator may be interposed between the beading and the cap plate and between the crimped portion and the cap plate. Accordingly, the side wall, including the beading and the crimped portion, may be electrically insulated from the cap plate.

During the use of a battery cell, gas is generated inside the battery cell. When an event such as thermal runaway occurs, more gas may be generated inside the battery cell, causing a rapid increase in internal pressure.

The battery cell housing may include a vent provided to discharge internal gas to the outside. When the internal pressure of the battery cell exceeds a predetermined pressure, the vent may be ruptured, allowing internal gas to be discharged to the outside through the vent.

By discharging internal gas to the outside, the internal pressure of the battery cell may be maintained below a predetermined range. The vent may be provided on at least one axial end or the other end of the housing.

For example, the vent may be provided at the cap plate.

However, when an event such as thermal runaway occurs in the battery cell, the high heat may soften or melt the gasket interposed between the rivet terminal and the rivet hole. The softened or melted gasket may not fix the rivet terminal to the rivet hole, potentially causing the rivet terminal to eject or detach from the rivet hole. Such ejection or detachment of the rivet terminal from the rivet hole may damage the current collecting plate fixed to the rivet terminal, or may damage the current collecting plate and the electrode fixed to the current collecting plate.

Meanwhile, a battery module or a battery pack may be manufactured by electrically connecting a plurality of battery cells. The rivet terminals of the plurality of battery cells included in the battery module or the battery pack are connected by tabs to be electrically connected to each other. However, when the rivet terminal of the battery cell is ejected or detached from the rivet hole, the tab connected to the rivet terminal may be damaged or destroyed. This may result in damage to the battery module or the battery pack.

The battery pack or battery module may include a structure to prevent gas discharge, which may be positioned adjacent to the vent of the battery cell. For example, the structure to prevent internal gas discharge may include a vent that discharges internal gas to the outside of the battery pack, a gas detection sensor, a blower fan, or a cooling module. When the rivet terminal of the battery cell is ejected or detached from the rivet hole, at least a portion of the internal gas may be discharged to the outside through the rivet hole. However, the battery pack or battery module may not have a structure to prevent gas from discharging through the rivet hole, or the structure may be inadequately provided such that the battery pack or battery module may be damaged or destroyed due to high heat or high pressure generated by the internal gas.

In order to solve the above-described problem, the battery cell according to the present invention may include a rivet terminal having a screw thread provided on the outer circumferential surface and inserted into the rivet hole with a gasket interposed therebetween.

The battery cell according to the present invention may include a gasket fitted into the rivet hole and in contact with the inner circumferential surface of the rivet hole.

The battery cell according to the present invention may include a restraining tapped portion provided in a circumferential direction on an inner circumferential surface of a rivet hole of a can housing.

According to another aspect of the present invention, the battery cell according to the present invention may include a restraining tapped portion provided in a circumferential direction on an inner circumferential surface of a rivet hole of a can housing; a gasket fitted into the rivet hole and in contact with the inner circumferential surface of the rivet hole; and a rivet terminal having a screw thread on an outer circumferential surface thereof, wherein the screw thread may be inserted into the rivet hole with the gasket interposed therebetween.

One of the screw thread of the rivet terminal and the restraining tapped portion of the rivet hole may include a male screw, and the other may include a female screw.

The rivet terminal is inserted into the gasket, and the screw thread pushes the gasket in a centrifugal direction. The gasket may be pushed into the restraining tapped portion while being expanded (elongated) in the centrifugal direction by the screw thread.

The centrifugal direction may be parallel to the radially outer side.

The screw thread of the rivet terminal is screw-fastened into the inner circumferential surface of the gasket, and the rivet terminal may be deformed to cause the gasket to protrude radially outward. Accordingly, the outer circumferential surface of the gasket protruding radially outward may be deformed to fit tightly against the restraining tapped portion.

According to another aspect of the present invention, it should be understood that the gasket is fixed in a manner similar to screw-fastening to the restraining tapped portion of the rivet hole, and the gasket may be firmly fixed as when screwed into the restraining tapped portion.

In addition, since the rivet terminal is screw-fastened to the gasket, and the gasket is screw-fastened to the restraining tapped portion of the rivet hole, the gasket may be in contact with the rivet terminal and the rivet hole without any gaps. Since the gasket is compressed in a screw-like manner between the screw thread of the rivet terminal and the restraining tapped portion, the sealing strength of the gasket is significantly increased, preventing electrolyte leakage. Moreover, even when the gasket softens or deforms during high-temperature storage of the battery cell, moisture may be prevented from entering the can housing.

The profile of the restraining tapped portion of the rivet hole and the profile of the screw thread of the rivet terminal may be oblique to the radial direction and the axial direction.

The profiles of the outer circumferential surface and the inner circumferential surface of the gasket which is pressed between the restraining tapped portion and the screw thread may be oblique to the radial direction and the axial direction.

Due to the oblique profiles to the radial direction and the axial direction, the gasket or the rivet terminal may also be restrained in the axial direction when a radial restraining force is applied to the gasket or the rivet terminal.

For example, when the restraining tapped portion of the rivet hole supports the gasket from the radially outer side, and the screw thread of the rivet terminal supports the gasket from the radially inner side, and a radial compressive force may be applied to the gasket. Since the profiles of the outer circumferential surface and the inner circumferential surface of the gasket are oblique to the radial and axial directions, the radial compressive force applied to the gasket may restrain the gasket in the radial and axial directions. In addition, since the profiles of the screw thread of the rivet terminal are oblique to the radial and axial directions, the radial compressive force applied to the rivet terminal may restrain the rivet terminal in the radial and axial directions.

That is, the radial compressive force applied to the gasket and the rivet terminal not only firmly fix the rivet hole to the gasket and the gasket to the rivet terminal in the radial direction, but also firmly fix the same in the axial direction.

The radially outer end of the screw thread of the rivet terminal may be the crest of the screw, and the radially inner end of the screw thread may be the root of the screw.

The restraining tapped portion of the rivet hole may include a screw portion including a crest and a root. The radially outer end of the restraining tapped portion may be the root of the screw, and the radially inner end of the restraining tapped portion may be the crest of the screw.

In some embodiments, a crest of the screw thread of the rivet terminal may be positioned radially inner than that of the screw portion of the restraining tapped portion. Accordingly, the rivet terminal may be easily inserted into the rivet hole having the gasket is inserted therein.

According to another aspect of the present invention, the radially outer end of the screw thread of the rivet terminal may be positioned radially inner than the radially inner end of the restraining tapped portion of the rivet hole. The outer diameter of the screw thread may be smaller than the internal diameter of the rivet hole.

In some embodiments, the crest of the screw thread of the rivet terminal may be positioned radially between the crest and the root of the screw portion of the restraining tapped portion. Accordingly, even when the gasket is melted or softened and is not able to firmly fix the rivet terminal, the restraining tapped portion of the rivet hole may axially restrain the screw thread of the rivet terminal to limit the detachment of the rivet terminal. In addition, the rivet terminal rotates in a circumferential direction and is inserted into the rivet hole into which the gasket is inserted, and the rivet terminal and the rivet hole may be screw-fastened with the gasket interposed therebetween. Therefore, the rivet terminal may be easily inserted into the rivet hole.

According to another aspect of the present invention, the crest of the screw thread of the rivet terminal may be positioned radially between the crest and the root of the screw portion of the restraining tapped portion. The radially outer end of the screw thread of the rivet terminal may be positioned radially between the radially inner end and the radially outer end of the restraining tapped portion. The outer diameter of the crest of the screw thread of the rivet terminal may be larger than the internal diameter of the screw crest of the restraining tapped portion and smaller than the internal diameter of the screw root of the restraining tapped portion.

The rivet terminal may include: a head having an outer diameter larger than an internal diameter of the rivet hole.

The rivet terminal may include: an insert portion extending from the head and having the screw thread provided on an outer circumferential surface thereof.

The rivet terminal may include: a rivet processing portion extending from the insert portion and bent radially outward.

According to another aspect of the present invention, the rivet terminal may include: a head having an outer diameter larger than an internal diameter of the rivet hole; an insert portion extending from the head and having the screw thread provided on an outer circumferential surface thereof; and a rivet processing portion extending from the insert portion and bent radially outward.

The outer diameter of the screw thread of the rivet terminal may be smaller than the internal diameter of the rivet hole. Accordingly, the rivet terminal may be easily inserted into the rivet hole, and a gasket may be interposed between the rivet terminal and the rivet hole.

The lead of the screw thread corresponds to that of the restraining tapped portion. Accordingly, the portion of the gasket interposed between the rivet terminal and the rivet hole may have a zigzag shape. Such zigzag shape increases the contact area between the gasket and the rivet terminal and between the gasket and the rivet hole, thereby increasing the sealing and restraining force.

Once the rivet terminal is sufficiently inserted into the rivet hole, the rivet processing portion may be bent radially outward.

The head and the bent rivet processing portion may fix the rivet terminal to the rivet hole in the axial direction.

The rivet processing portion bent radially outward may be pressed in the axial direction toward the head.

The distance between the side surface of the screw thread facing axially inward and the side surface of the restraining tapped portion facing axially outward may be reduced as the rivet processing portion is pressed toward the bottom surface of the head to compress the portion of the gasket interposed between the side surface of the screw thread facing axially inward and the side surface of the restraining tapped portion facing axially outward.

The gasket is compressed in the axial direction, the gasket is strongly restrained in the rivet hole in the axial and radial directions, and the rivet terminal is strongly restrained in the axial and radial directions by the gasket. Accordingly, the bonding and sealing strength of the screw thread of the rivet terminal, the restraining tapped portion, and the gasket may be significantly enhanced. Furthermore, electrolyte leakage is prevented, and moisture may not enter the battery cell even when the gasket is deformed during high-temperature storage of the battery cell.

The axially inner side may be parallel to the axial direction and directed toward the inside of the can housing.

The radially outer side may be parallel to the axial direction and directed toward the outside of the can housing.

The gasket may include a tube shape extending in the axial direction.

The gasket may include a flange.

The flange may be interposed between the head of the rivet terminal and one axial end wall of the can housing.

The outer diameter of the flange may be larger than the internal diameter of the rivet hole.

The outer diameter of the flange may be larger than that of the head of the rivet terminal. Accordingly, the head of the rivet terminal may be electrically insulated from one axial end wall of the can housing.

The flange may be provided at one axial end of the gasket.

The gasket may include an opposite axial end. The opposite axial end of the gasket may be bent radially outward.

The opposite axial end of the bent gasket may be interposed between the bent rivet processing portion of the rivet terminal and one axial end wall of the can housing.

The opposite axial end of the bent gasket may protrude radially outer than the bent rivet processing portion. Accordingly, the rivet processing portion may be electrically insulated from one axial end wall of the can housing.

The battery cell according to the present invention may further include an expansion member press-fitted into the rivet terminal.

According to another aspect of the present invention, the battery cell according to the present invention may include a restraining tapped portion provided in a circumferential direction on an inner circumferential surface of a rivet hole of a can housing; a gasket fitted into the rivet hole and in contact with the inner circumferential surface of the rivet hole; a rivet terminal having a screw thread on an outer circumferential surface thereof, wherein the screw thread may be inserted into the rivet hole with the gasket interposed therebetween; and an expansion member press-fitted into the rivet terminal.

The expansion member may be press-fitted into the rivet terminal, and the rivet terminal may expand in the radial direction, increasing the outer diameter thereof. Accordingly, the gasket interposed between the rivet terminal and the rivet hole may be more strongly compressed, the rivet terminal and the gasket may be more firmly adhered, and the gasket and the rivet hole may be more firmly adhered. The rivet terminal and the gasket may be firmly fixed to the rivet hole.

The expansion member may include an expansion pin.

The expansion member may include a screw portion provided on an outer surface thereof.

The rivet terminal may include: an insert portion extending from the head, having the screw thread provided on an outer circumferential surface thereof, and provided with an expansion hole where the expansion member may be press-fitted.

The rivet terminal may include a rivet processing portion extending from the insert portion and bent radially outward.

According to another aspect of the present invention, the rivet terminal may include: a head having an outer diameter larger than an internal diameter of the rivet hole; an insert portion extending from the head, having the screw thread provided on an outer circumferential surface thereof, and provided with an expansion hole where the expansion member may be press-fitted; and a rivet processing portion extending from the insert portion and bent radially outward.

The expansion hole may guide the expansion member so as to press-insert the expansion member into the rivet terminal.

The expansion hole may be parallel to a lengthwise direction of the insert portion.

The lengthwise direction of the insert portion may be parallel to the axial direction.

The internal diameter of the expansion hole may be smaller than the outer diameter of the expansion member. Accordingly, the expansion member may be press-fitted into the expansion hole, thereby increasing the outer diameter of the rivet terminal.

The outer diameter of the screw thread of the rivet terminal may be smaller than the internal diameter of the rivet hole.

The lead of the screw thread corresponds to that of the restraining tapped portion.

The distance between the side surface of the screw thread facing axially inward and the side surface of the restraining tapped portion facing axially outward may be reduced as the rivet processing portion is pressed toward the bottom surface of the head to compress a portion of the gasket interposed between the side surface of the screw thread facing axially inward and the side surface of the restraining tapped portion facing axially outward.

The battery cell manufacturing method according to the present invention may include: preparing a can housing having a rivet hole on an inner circumferential surface thereof, the rivet hole provided with a restraining tapped portion in a circumferential direction; inserting a gasket into the rivet hole in an axial direction; preparing a rivet terminal including: a head; an insert portion having a screw thread provided on an outer circumferential surface thereof; and a rivet processing portion provided at an axially inner end of the insert portion, and inserting the rivet processing portion and the insert portion into the rivet hole from an axially outer side of the rivet hole with a gasket may be inserted in the rivet hole; and pressing the rivet processing portion axially outward while centrifugally spreading the rivet processing portion to further pressing the can housing toward a bottom surface of the head.

The centrifugal direction may be parallel to the radially outer side.

The battery cell manufacturing method may further include: pressing an expansion member into the rivet terminal.

The expansion fastening member may include the expansion member.

The battery cell manufacturing method may further include: pressing an expansion member into the rivet terminal. The expansion member may include an expansion pin.

The expansion member may include an expansion screw having an expansion screw portion provided on an outer surface thereof.

The distance between the side surface of the screw thread facing axially inward and the side surface of the restraining tapped portion facing axially outward may be reduced as the rivet processing portion is pressed toward the bottom surface of the head to compress a portion of the gasket interposed between the side surface of the screw thread facing axially inward and the side surface of the restraining tapped portion facing axially outward.

### [ADVANTAGEOUS EFFECTS]

According to the present invention, since the rivet terminal is screw-fastened to the restraining tapped portion of the can housing, the bonding strength and structural rigidity of the rivet terminal may be significantly increased.

According to the present invention, even when the ductility of the gasket is increased, the screw thread of the rivet terminal is axially restrained by the restraining tapped portion, preventing the rivet terminal from being ejected or detached from the rivet hole during thermal runaway of the battery pack.

According to the present invention, the rivet terminal may be prevented from being ejected or detached from the rivet hole of the can housing during thermal runaway of the battery pack. Accordingly, internal gas in the battery cell may be discharged to the outside through the vent rather than through the rivet hole. In addition, since the structure of the battery pack or battery module is sufficiently protected against gas discharge, the risk of fire or explosion may be significantly reduced.

According to the present invention, as the expansion member is press-fitted into the insert portion of the rivet terminal, the diameters of the insert portion and the screw thread are expanded such that the screw thread of the insert portion may be moved closer to the restraining tapped portion. Accordingly, the portion of the gasket between the screw thread 64 and the restraining tapped portion may be further compressed, thereby further increasing the bonding strength between the rivet terminal and the restraining tapped portion.

In addition to the advantageous effects described above, specific effects of the present invention will be described further while describing specific details of the present invention.

### [BRIEF DESCRIPTION OF DRAWINGS]

FIG. 1 is an exploded perspective view schematically illustrating the stacking structure of electrodes and separators constituting a cylindrical electrode assembly.
FIG. 2 is a perspective view schematically illustrating the stacked structure of the electrodes and separators of FIG. 1.
FIG. 3 is a perspective view schematically illustrating a cylindrical electrode assembly.
FIG. 4 is a cross-sectional view schematically illustrating one axial side of a battery cell according to a first embodiment of the present invention.
FIG. 5 is a cross-sectional view schematically illustrating the fastening structure of a rivet terminal and a restraining tapped portion of the battery cell of FIG. 4.
FIG. 6 is an enlarged view schematically illustrating the fastening structure of the rivet terminal and the restraining tapped portion of FIG. 5.
FIG. 7 is a cross-sectional view schematically illustrating a gasket inserted into the restraining tapped portion of the battery cell according to the first embodiment of the present invention.
FIG. 8 is a cross-sectional view schematically illustrating a rivet terminal inserted into the restraining tapped portion of FIG. 7.
FIG. 9 is a cross-sectional view schematically illustrating a rivet terminal fastened to the restraining tapped portion of FIG. 8.
FIG. 10 is a cross-sectional view schematically illustrating a rivet processing portion of the rivet terminal of FIG. 9 is bent radially outward.
FIG. 11 is a cross-sectional view schematically illustrating one axial side of the battery cell according to a second embodiment of the present invention.
FIG. 12 is a cross-sectional view schematically illustrating a rivet terminal inserted into the restraining tapped portion of a battery cell according to of the second embodiment the present invention.
FIG. 13 is a cross-sectional view schematically illustrating a rivet terminal attached to the restraining tapped portion of FIG. 12.
FIG. 14 is a cross-sectional view schematically illustrating an expansion member inserted into an expansion hole of the rivet terminal of FIG. 13.
FIG. 15 is a cross-sectional view schematically illustrating a rivet terminal expanding as an expansion member is inserted into the expansion hole of the rivet terminal of FIG. 14.
FIG. 16 is a cross-sectional view schematically illustrating one axial side of a battery cell according to a third embodiment of the present invention.
FIG. 17 is a cross-sectional view schematically illustrating a rivet terminal expanding as an expansion member is inserted into an expansion hole of the rivet terminal of FIG. 16.
FIG. 18 is a cross-sectional view schematically illustrating a crest of a screw thread of a rivet terminal is positioned radially between crest and root of a screw portion of a restraining tapped portion.

### [DESCRIPTION OF REFERENCE NUMERALS]

1: battery cell
10: can housing
11: side wall
12: bottom (one axial end wall)
14: rivet hole
20: electrode assembly
21: first electrode
22: second electrode
23: metal foil
24: active material layer
25: coated portion
26: non-coated portion
27: electrode tab (notched tab)
28: separator
29: core
30: current collecting plate
40: restraining tapped portion
41: restraining tab
411: crest of the screw portion of the restraining tapped portion
412: root of the screw portion of the restraining tapped portion
S1: side surface of the restraining tapped portion facing axially outward
50: gasket
51: flange
52: opposite axial end of gasket
60: rivet terminal
61: head
63: insert portion
64: screw thread
641: crest (radially outer end) of screw thread
S2: side surface of the screw thread facing axially inward
65: rivet processing portion
G: distance between side surfaces
67: expansion hole
68: screw groove
70: expansion member
71: expansion pin
72: expansion screw
D1: internal diameter of rivet hole
D2: outer diameter of screw thread
D3: diameter of expansion hole
D4: diameter of expansion member

### [DETAILED DESCRIPTION OF THE PREFERRED EMBODIMENTS]

Hereinafter, a preferred embodiment of the present invention will be described.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected to" or "in contact with" another element, the element may be directly connected to or in direct contact with another element, or there may exist an interposing element in the middle. On the other hand, when an element is referred to as being "directly connected to" or "in direct contact with" another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

In the description of the embodiments, "axial direction" refers to "a direction in which the axis constituting the winding center of the jelly-roll type electrode assembly extends", and "radial direction" refers to "a direction toward or away from the axis," and "circumferential direction" refers to "a direction surrounding the axis." The widthwise and lengthwise directions of the electrode and separator before winding correspond to the axial and circumferential directions of the jelly-roll after winding, respectively. The upper and lower surfaces of the electrode and separator before winding correspond to the radially inner and outer surfaces of the electrode and separator of the jelly roll after winding, respectively.

In the description of the embodiments, axially outer and inner sides may refer to one and the other axial sides, respectively, and upper and lower ends may refer to one and the other axial side, respectively. Radially outer side may refer to a direction away from the axis, and radial inner side may refer to a direction away the axis.

Hereinafter, a battery cell according to an embodiment of the present invention will be described.

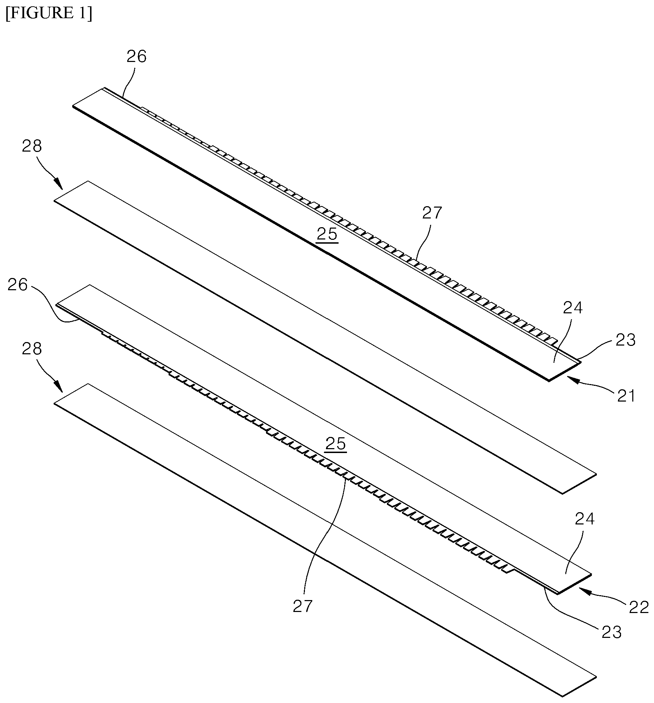

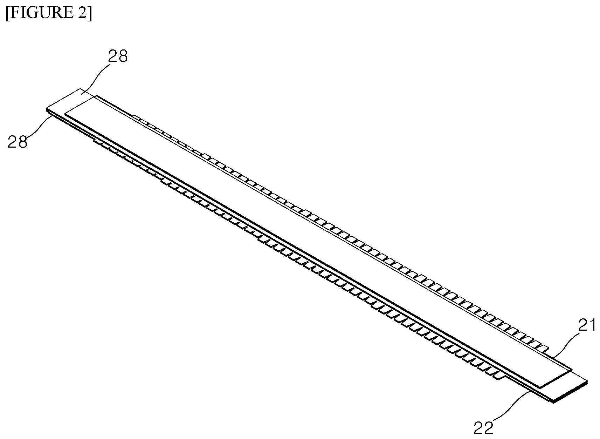

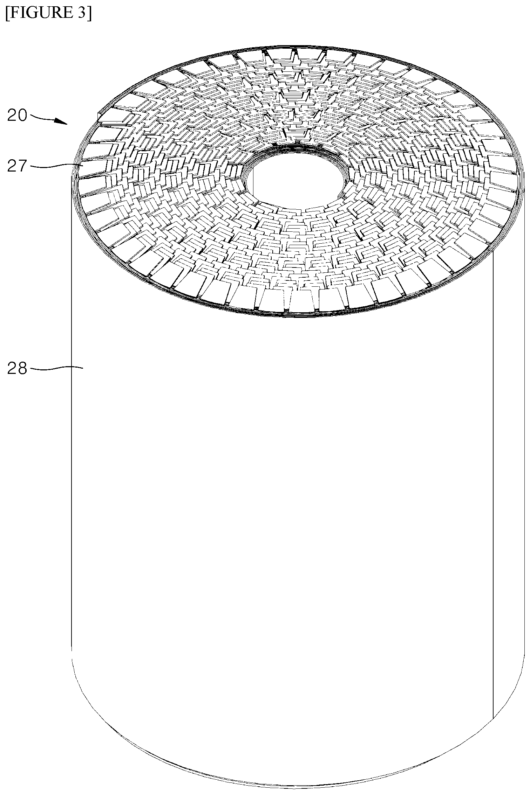

FIG. 1 is an exploded perspective view schematically illustrating the stacking structure of electrodes and separators constituting a cylindrical electrode assembly, FIG. 2 is a perspective view schematically illustrating the stacked structure of the electrodes and separators of FIG. 1, and FIG. 3 is a perspective view schematically illustrating a cylindrical electrode assembly.

Referring to FIGS. 1 to 4, a cylindrical battery cell 1 according to an embodiment of the present invention includes: an electrode assembly 20; a current collecting plate 30 electrically connected to the electrode assembly 20; and a can housing 10 accommodating the electrode assembly 20 and the current collecting plate 30.

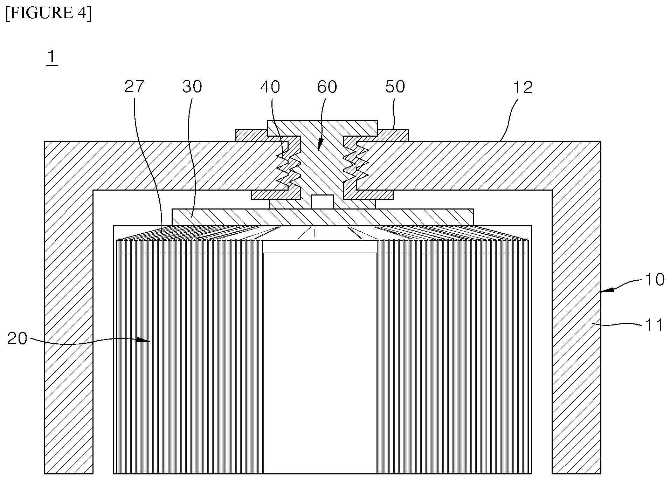

The can housing 10 (refer to FIG. 4) is cylindrical. The can housing 10 is made of a conductive material to be electrically connected to the cathode current of the electrode assembly 20. The can housing 10 may electrically connect the electrode assembly 20 to the anode.

The electrode assembly 20 includes a first electrode 21, a second electrode 22 and a separator 28 having a predetermined width and extending in a lengthwise direction as shown in FIG. 1. The electrode assembly 20 is manufactured in the form of a jelly-roll by forming a laminate wherein the first electrode 21, the separator 28, the second electrode 22 and the separator 28 are stacked in order as shown in FIG. 2, and winding the laminate around a core shaft as shown in FIG. 3. The electrode assembly 20 is cylindrical and has a core portion9, which is an empty space, at the center thereof.

The first electrode 21 may be an anode, and the second electrode 22 may be a cathode. Apparently, it may be vice versa.

The first electrode 21 and the second electrode 22 are manufactured in the form of sheets. The electrode sheet is manufactured by applying an active material layer 24 to the surface of a metal foil 23. The electrode sheet has a coated portion 25 where the active material layer 24 is applied, and a non-coated portion 26 without the active material layer 24. The anode sheet may have a non-coated portion 26 at one widthwise end thereof, and the cathode sheet may have a non-coated portion 26 at an opposite widthwise end thereof.

The non-coated portion 26 is exposed or protrude in the widthwise direction from the laminate. The non-coated portion 26 itself functions as an electrode tab 27.

The non-coated portion 26 may be provided with notches at a predetermined interval to form notched tabs 27 in the shape of a flag. The plurality of notched tabs 27 may be arranged in a sawtooth shape along the lengthwise direction of the electrode.

In the embodiment, the notched tabs 27 having a shape of an isosceles trapezoid are exemplified. However, the notched tabs 27 may have various shapes such as a semicircle, a semi-ellipse, a triangle, a rectangle, a parallelogram, etc.

In addition, in the embodiment, the notched tabs 27 having the same width and arranged along the lengthwise direction are exemplified. However, the width of the notched tabs may be gradually or stepwisely increased from the core toward the outer circumference.

In addition, in the embodiment, the notched tabs 27 with gradually increasing height from the core toward the outer circumference are exemplified. However, the height of the notched tabs 27 may be a constant or may gradually decrease.

In addition, in the embodiment, exemplified is a structure with notched tabs 27 removed from predetermined sections of the centripetal end and the centrifugal end portion of the non-coated portion 26. However, it is also apparent that the notched tabs 27 are not removed from the centripetal end portion of the non-coated portion 26, and the notched tabs 27 are not removed from the centrifugal end portion of the non-coated portion 26.

In the jelly-roll type electrode assembly 20, the notched tabs 27 may be bent in the radial direction and flattened as shown in FIG. 3. The notched tabs 27 may be bent radially inward or radially outward. In the embodiment, exemplified is a structure with the notched tabs 27 bent radially inward.

The notched tabs 27 may be bent one by one during the process of forming the jelly-roll type electrode assembly 20 by winding the laminate. Alternatively, the notched tabs 27 may be bent all at once after the jelly-roll type electrode assembly 20 is formed by winding the laminate.

The notched tabs 27 of the first electrode 21 and the notched tabs 27 of the second electrode 22 that are folded and overlapped in the radial direction may provide a plane substantially perpendicular to the axial direction at two axial ends of the electrode assembly 20.

As shown in FIG. 4, the current collecting plate 30 may be bonded to the substantially flat surface provided by the bent notched tabs 27 exposed at the two axial ends of the electrode assembly 20.

In the embodiment, the current collecting plate 30 bonded to a one axial end portion of the electrode assembly 20 may be an anode collecting plate, and the current collecting plate (not shown) bonded to a opposite axial end portion of the electrode assembly 20 may be an cathode collecting plate. However, the current collecting plate 30 bonded to the one axial end may be an cathode collecting plate, and the current collecting plate bonded to the opposite axial end may be a anode collecting plate.

The anode current collecting plate may include aluminum, and the cathode current collecting plate may include copper. However, the material is not limited thereto.

The current collecting plate 30 may be manufactured by punching, trimming, piercing, and bending a metal sheet.

The can housing 10 includes: a bottom 12; a side wall 11 connected to the bottom 12 and extending in the axial direction; and a cap assembly (not shown) covering the open end portion of the side wall 11.

The bottom 12 may have a disk shape, and the side wall 11 may have a circular tube shape. The bottom 12 and the side wall 11 may be formed integrally or connected by welding.

The bottom 12 and the side wall 11 may be manufactured by subjecting a metal sheet of steel with nickel plated thereon to deep drawing, and trimming the same with a punch while holding the front end portion of the side wall 11 with a blank holder. Apparently, the material of the can housing 10 is not limited thereto.

The collecting plate 30 is bonded to one axial end of the electrode assembly 20. For example, the back surface of the collecting plate 30 and the electrode tab 27 may be welded by irradiating a laser on the surface of the collecting plate 30. The periphery of the collecting plate 30 corresponds to the electrode tabs 27 of the electrode assembly 20, and the center portion of the collecting plate 30 is arranged to correspond to the core portion of the electrode assembly 20. The current collector plate 30 bonded to one axial end of the electrode assembly 20 may be an anode current collector plate. Depending on the embodiment, the current collector plate may also be a cathode current collector plate.

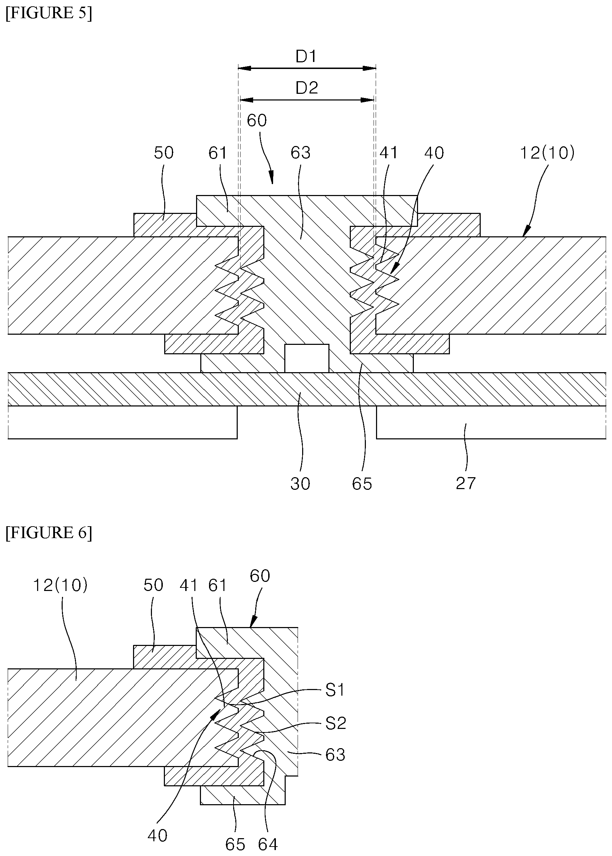

FIG. 4 is a cross-sectional view schematically illustrating one axial side of a battery cell according to a first embodiment of the present invention, FIG. 5 is a cross-sectional view schematically illustrating the fastening structure of a rivet terminal and a restraining tapped portion of the battery cell of FIG. 4, and FIG. 6 is an enlarged view schematically illustrating the fastening structure of the rivet terminal and the restraining tapped portion of FIG. 5.

Referring to FIGS. 4 to 6, a battery cell 1 according to a first embodiment of the present invention may include: a restraining tapped portion 40; a gasket 50; and a rivet terminal 60.

The restraining tapped portion 40 may be provided in a circumferential direction on the inner circumferential surface of the rivet hole 14 of the can housing 10. A rivet hole 14 is provided at the bottom 12 of the can housing 10. The rivet hole 14 may be provided at the center of the bottom 12. The restraining tapped portion 40 has a shape of a screw thread 64 formed by tapping the inner circumferential surface of the rivet hole 14. The restraining tapped portion 40 may be annular along the circumferential direction on the inner circumferential surface of a rivet hole 14.

The bottom 12 of the can housing 10 may refer to one axial end wall.

Although not shown in FIGS. 4 to 18, an insulator may be interposed between the current collecting plate 30 fixed to one axial end of the electrode assembly 20 and the bottom 12. Accordingly, the bottom 12 and the current collecting plate 30 may be electrically insulated. The current collecting plate 30 may be electrically connected to the rivet terminal 60.

The gasket 50 may be fitted into and in contact with the inner circumferential surface of the rivet hole 14. The gasket 50 is made of an insulating material. The gasket 50 may be tubular to be inserted into the rivet hole 14, and a flange 51 may be provided at the axial end. According to the embodiment, the flange 51 may be provided at one axial end of the gasket 50. The flange 51 is a portion that is in contact with the outer surface of the can housing 10.

The gasket 50 may be made entirely of an elastic (stretchy) material.

The screw thread 64 may be provided on the outer circumferential surface of the rivet terminal 60, and the screw thread 64 may be inserted into the rivet hole 14 with the gasket 50 interposed therebetween. Accordingly, the gasket 50 may be interposed radially between the screw thread 64 provided on the outer circumferential surface of the rivet terminal 60 and the inner circumferential surface of the rivet hole 14. The outer diameter of the screw thread 64 may be larger than the internal diameter of the gasket 50 and slightly smaller than the outer diameter of the gasket 50. The rivet terminal 60 is inserted into the gasket 50 while being rotated. Here, the screw thread 64 pushes the gasket 50 in a centrifugal direction, and the gasket 50 is pushed into the restraining tapped portion 40 while being expanded (elongated) in the centrifugal direction by the screw thread 64. The centrifugal direction may be parallel to the radially outer side.

The screw thread 64 of the rivet terminal 60 is screw-fastened into the inner circumferential surface of the gasket 50, and the rivet terminal 60 may be deformed to cause the gasket 50 to protrude radially outward. Accordingly, the outer circumferential surface of the gasket 50 protruding radially outward may be deformed to fit tightly against the restraining tapped portion 40. According to another aspect of the present invention, it should be understood that the gasket 50 is fixed in a manner similar to screw-fastening to the restraining tapped portion 40 of the rivet hole, and the gasket 50 may be firmly fixed as when screwed into the restraining tapped portion 40. Since the rivet terminal 60 is screw-fastened to the gasket 50 and the gasket 50 is fastened to the restraining tapped portion 40 of the rivet hole 14 of the can housing 10 in a similar manner to that of being screw-fastened, the bonding strength and structural rigidity of the rivet terminal 60 may be significantly increased. Accordingly, the rivet terminal 60 or the gasket 50 may not be ejected or separated from the rivet hole 14. In addition, even when the ductility of the gasket 50 increases, the screw thread 64 of the rivet terminal 60 may be caught by the restraining tapped portion 40 and restrained in the axial direction.

Referring to FIGS. 4 to 10, the profile of the restraining tapped portion 40 of the rivet hole 14 and the profile of the screw thread 64 of the rivet terminal 60 may be oblique to the radial direction and the axial direction., and the profiles of the outer circumferential surface and the inner circumferential surface of the gasket 50 which is pressed between the restraining tapped portion 40 and the screw thread 64 may also be oblique to the radial direction and the axial direction. When the restraining force in the radial direction is applied to the gasket 50 or the rivet terminal 60 due to the oblique profiles in the radial and axial directions, the gasket 50 or the rivet terminal 60 may also be restrained in the axial direction. When the restraining tapped portion 40 of the rivet hole 14 supports the gasket 50 from the radially outer side, and the screw thread 64 of the rivet terminal 60 supports the gasket 50 from the radially inner side, and a radial compressive force may be applied to the gasket 50. Since the profiles of the outer circumferential surface and the inner circumferential surface of the gasket 50 are oblique to the radial and axial directions, the radial compressive force applied to the gasket 50 may restrain the gasket 50 in the radial and axial directions. In addition, since the profiles of the screw thread 64 of the rivet terminal 60 are oblique to the radial and axial directions, the radial compressive force applied to the rivet terminal 60 may restrain the rivet terminal 60 in the radial and axial directions. That is, the radial compressive force applied to the gasket 50 and the rivet terminal 60 not only firmly fix the rivet hole 14 to the gasket 50, and the gasket 50 to the rivet terminal 60 in the radial direction, but also firmly fix the same in the axial direction.

In addition, since the rivet terminal 60 is screw-fastened to the gasket 50, and the gasket 50 is screw-fastened to the restraining tapped portion 40 of the rivet hole 14 of the can housing 10 in a similar manner, the gasket 50 may be in contact with the rivet terminal 60 and the rivet hole 14 without any gaps. Since the gasket 50 is compressed in a screw-like manner between the screw thread 64 of the rivet terminal 60 and the restraining tapped portion 40, the sealing strength of the gasket 50 is significantly increased, preventing electrolyte leakage. Moreover, even when the gasket 50 softens or deforms during high-temperature storage of the battery cell, moisture may be prevented from entering the can housing 10.

In addition, during a side rupture test, the gasket 50 may have the ductility thereof increased by high temperature heat. However, since the gap between the screw thread 64 of the rivet terminal 60 and the restraining tapped portion 40 is in a zigzag shape in the axial direction, the screw thread 64 and the restraining tapped portion 40 are caught by each other in the axial direction, and the softened gasket 50 may be maintained in a state of being interposed between the screw thread 64 of the rivet terminal 60 and the restraining tapped portion 40. Specifically, the restraining tapped portion 40 of the rivet hole 14 and the outer circumferential surface of the gasket 50 are fastened in a manner similar to a screw-fastening, the gasket 50 is axially restrained to the rivet hole 14, the screw thread 64 of the rivet terminal 60 and the inner circumferential surface of the gasket 50 are screw-fastened, and the rivet terminal 60 may be axially restrained to the gasket 50. Accordingly, the rivet terminal 60 may be prevented from being ejected or detached from the terminal hole (rivet hole).

The battery cell according to the present invention may be included in at least one battery pack or battery module that accommodates a plurality of battery cells therein. In the battery pack or battery module, a structure for preventing internal gas discharge may be arranged to correspond to a vent of the battery cell. The vent of the battery cell may discharge internal gas to the outside. For example, the structure to prevent internal gas discharge may include a vent that discharges internal gas to the outside of the battery pack, a gas detection sensor, a blower fan, or a cooling module. For example, rivet terminals and vents of a plurality of battery cells may be arranged on one axial side and the opposite axial side, respectively, and a structure to prevent internal gas from discharging may be provided on the opposite axial side of the battery pack or the battery module that accommodates the plurality of the battery cells, and the structure to prevent internal gas from discharging may not be provided or may be provided in adequately on the one axial side of the battery pack or the battery module. When thermal runaway of the battery pack occurs, the rivet terminal 60 arranged on the upper side (one axial side) of the battery pack may be prevented from being ejected or detached from the rivet hole 14 of the can housing 10. Accordingly, since the structures protecting against gas discharge in the battery pack may sufficiently protect against internal gas discharged through the vents of the battery cells, the risk of fire or explosion may be significantly reduced.

In addition, in a battery pack or battery module, the rivet terminals 60 of a plurality of battery cells are connected by a connecting tab, and the plurality of battery cells may be electrically interconnected. However, when the rivet terminal 60 is ejected or detached from the rivet hole 14 due to a cause such as thermal runaway, the connecting tab fixed to the rivet terminal 60 may be damaged or destroyed. In a battery pack in which the connecting tab is welded to the rivet terminal 60, the connecting tab may be prevented from being damaged due to the rivet terminal 60 being ejected or detached from the can housing 10, thereby preventing the damage of the connecting tab from leading to damage to the battery pack.

The rivet terminal 60 may include: a head 61; an insert portion 63; and a rivet processing portion 65. The head 61, the insert portion 63, and the rivet processing portion 65 may be formed integrally.

The head 61 may have an outer diameter larger than the internal diameter D1 of the rivet hole 14. The head 61 may be circular or polygonal. When the rivet terminal 60 is inserted into the rivet hole 14, the head 61 may be caught on the periphery of the rivet hole 14, preventing the rivet terminal 60 from being inserted any further.

The insert portion 63 may extend from the head 61 and have a screw thread 64 provided on the outer circumferential surface thereof. The insert portion 63 may have an overall cylindrical or circular pipe shape, and may be provided with a screw thread 64 on the outer circumferential surface thereof. The screw thread 64 may deform or expand the gasket 50 into a screw shape and fasten the same to the restraining tapped portion 40 in a screw-like manner. Here, the gasket 50 may be a medium for screw-fastening the screw thread 64 and the restraining tapped portion 40.

The rivet processing portion 65 may extend from the insert portion 63 and be bent radially outward. A plurality of rivet processing portions 65 may be provided along the circumferential direction at the opposite axial end (lower end) of the insert portion 63. Depending on the embodiment, a single rivet processing portion 65 may be provided. While being bent in the radial direction of the insert portion 63, the rivet processing portion 65 is caught on the periphery of the rivet hole 14, thereby preventing the rivet terminal 60 from being ejected or detached from the rivet hole 14.

The outer diameter D2 of the screw thread 64 of the rivet terminal 60 may be smaller than the internal diameter D1 of the rivet hole 14. Accordingly, as the rivet terminal 60 rotates, the rivet terminal 60 may be smoothly screw-fastened to the interior of the rivet hole 14, and the gasket 50 may be inserted between the rivet terminal 60 and the restraining tapped portion 40 in a compressed and tightly sealed state.

The lead of the screw thread 64 may correspond to that of the restraining tapped portion 40. The lead of the screw thread 64 may be defined as the distance between adjacent screw threads (crests). The lead of the screw thread 64 may mean the pitch of the screw. The distance G between the side surface S2 of the screw thread 64 facing axially inward (the opposite axial side) and the side surface S1 of the restraining tapped portion 40 facing axially outward (one axial side) may be reduced as the rivet processing portion 65 is pressed toward the bottom surface (upper side in FIG. 4) of the head 61 to compress the portion of the gasket 50 interposed therebetween. The gasket 50 is compressed in the axial direction, the gasket 50 is strongly restrained in the rivet hole 14 in the axial and radial directions, and the rivet terminal 60 is strongly restrained in the axial and radial directions by the gasket 50. Accordingly, the bonding and sealing strength of the screw thread 64 of the rivet terminal 60, the restraining tapped portion 40, and the gasket 50 may be significantly enhanced. Furthermore, electrolyte leakage is prevented, and moisture may not enter the battery cell even when the gasket 50 is deformed during high-temperature storage of the battery cell 1.

Referring to FIGS. 4 to 10, the crest 641 of the screw thread 64 of the rivet terminal 60 is arranged radially inner than the crest 411 of the screw portion of the restraining tapped portion 40.

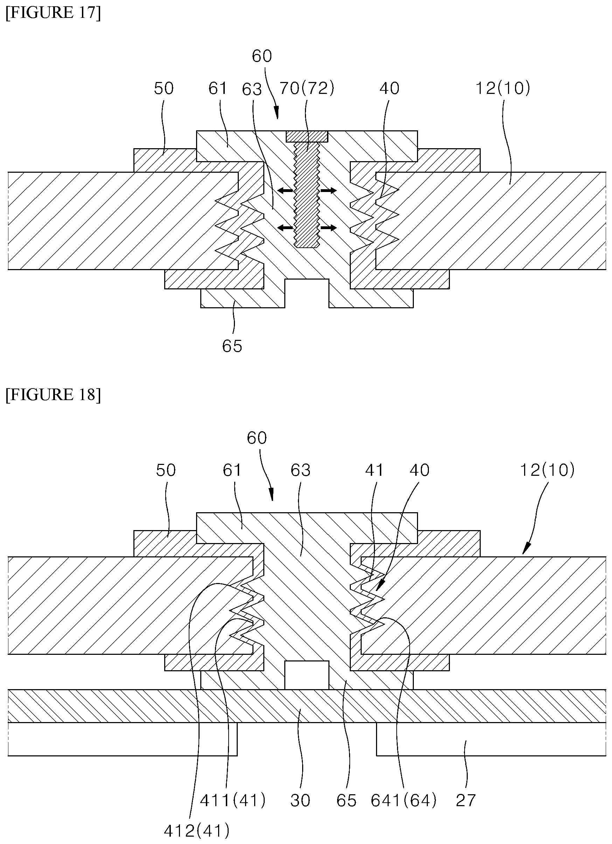

However, referring to FIG. 18, according to an embodiment, the crest 641 of the screw thread 64 of the rivet terminal 60 may be positioned radially between the crest 411 and the root 412 of the screw portion of the restraining tapped portion 40. Accordingly, even when the gasket 50 is melted or softened and is not able to firmly fix the rivet terminal 60, the restraining tapped portion 40 of the rivet hole 14 may axially restrain the screw thread 64 of the rivet terminal 60 to limit the detachment of the rivet terminal 60. In addition, the rivet terminal 60 rotates in a circumferential direction and is inserted into the rivet hole 14 into which the gasket 50 is inserted, and the rivet terminal 60 and the rivet hole 14 may be screw-fastened with the gasket 50 interposed therebetween. Therefore, the rivet terminal 60 may be easily inserted into the rivet hole 14.

A method for manufacturing a battery cell according to the first embodiment of the present invention as described above will be described.

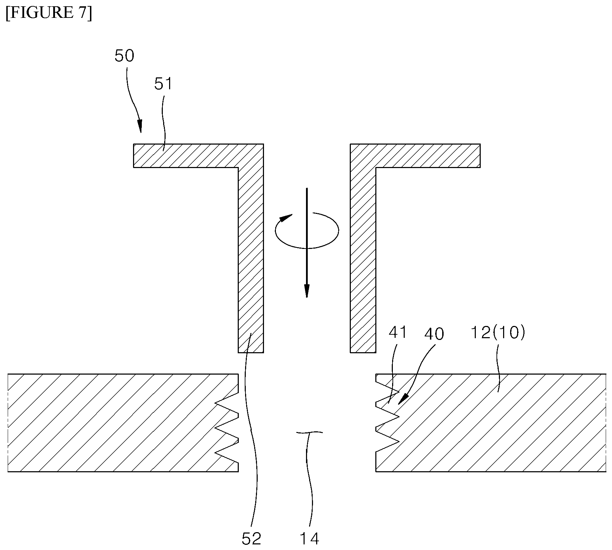

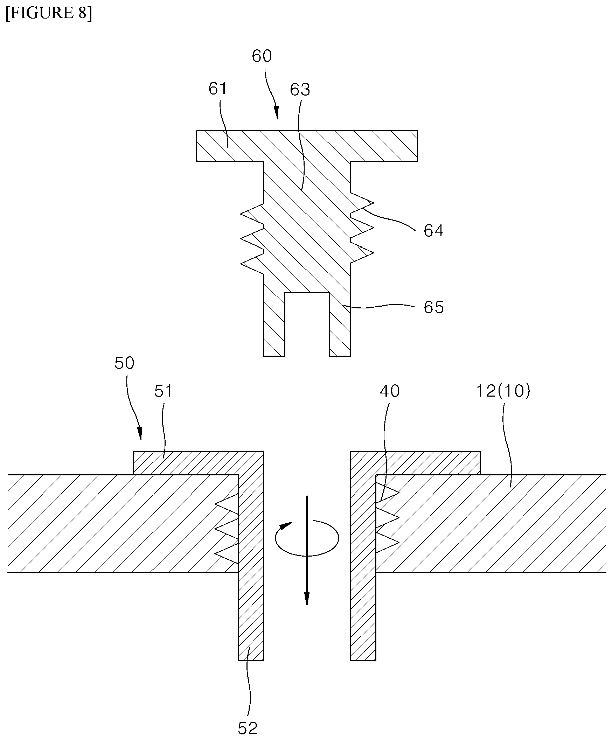

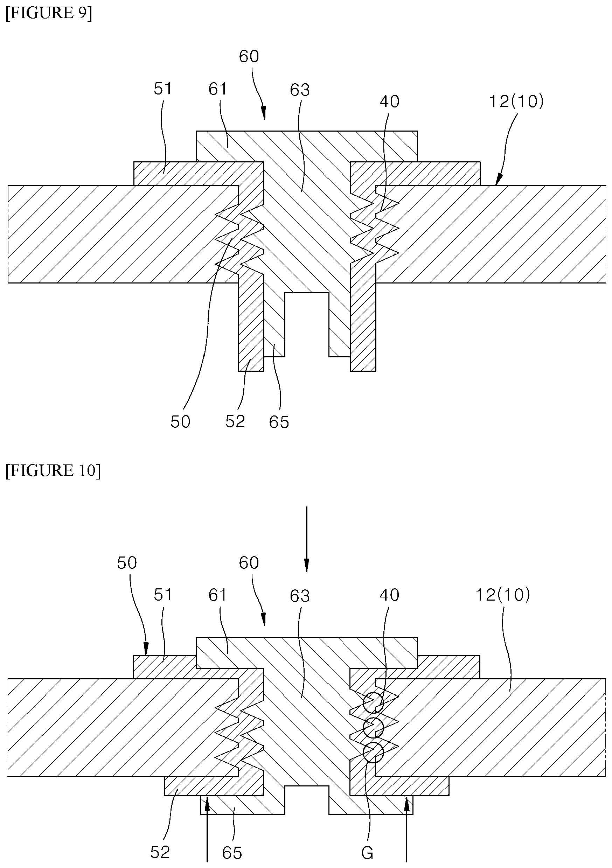

FIG. 7 is a cross-sectional view schematically illustrating a gasket inserted into the restraining tapped portion of the battery cell according to the first embodiment of the present invention, FIG. 8 is a cross-sectional view schematically illustrating a rivet terminal inserted into the restraining tapped portion of FIG. 7, FIG. 9 is a cross-sectional view schematically illustrating a rivet terminal fastened to the restraining tapped portion of FIG. 8, and FIG. 10 is a cross-sectional view schematically illustrating a rivet processing portion of the rivet terminal of FIG. 9 is bent radially outward.

Referring to FIGS. 7 to 10, a can housing 10 is prepared. At the center of the bottom 12 of the can housing 10, a rivet hole 14 provided with a restraining tapped portion 40 on the inner circumferential surface thereof in a circumferential direction is provided.

A gasket 50 is inserted into the rivet hole 14 of the can housing 10 in the axial direction. Here, the gasket 50 is inserted into the rivet hole 14 while being rotated in the circumferential direction (see FIG. 7). Unlike the embodiment, the gasket 50 may be inserted into the rivet hole 14 without being rotated. When the flange 51 of the gasket 50 comes into contact with the outer surface (one axial end surface) of the can housing 10, the insertion of the gasket 50 is stopped.

A rivet terminal 60 is prepared on the upper side (one axial side) of the can housing 10 (see FIG. 8). The rivet terminal 60 includes a head 61; an insert portion 63 having a screw thread 64 on the outer circumferential surface thereof; and a rivet processing portion 65 provided at the axially inner end of the insert portion 63.

With the gasket 50 inserted in the rivet hole 14, the rivet processing portion 65 and the insert portion 63 are inserted into the rivet hole 14 from axially outer side (one side) of the rivet hole 14 (see FIG. 8). The rivet terminal 60 is inserted into the rivet hole 14 while being rotated in the circumferential direction. Here, the screw thread 64 pushes the gasket 50 outward and deforms or expands the same radially outward such that the gasket 50 is pressed into the restraining tapped portion 40.

When the rivet terminal 60 is fully inserted into the rivet hole 14, the gasket 50 is interposed between the rivet terminal 60 and the rivet hole 14 (see FIG. 9). Since the flange 51 of the gasket 50 protrudes radially outer than the head 61 of the rivet terminal 60, and the opposite axial end 52 of the gasket 50 protrudes axially outer than the rivet processing portion 65 of the rivet terminal 60 in the opposite direction, the gasket 50 may electrically insulate the rivet terminal 60 and the bottom 12 of the can housing.

The rivet processing portion 65 is bent so as to spread the rivet processing portion 65 in the centrifugal direction, and the bent rivet processing portion 65 is pressed axially outward to further press the can housing 10 toward the bottom surface of the head 61 (see FIG. 10). As the rivet processing portion 65 is bent, the opposite axial end 52 of the gasket 50 may be bent radially outward. Since the opposite axial end 52 of the gasket 50 protrudes radially outer than the rivet processing portion 65 of the rivet terminal 60, the gasket 50 may electrically insulate the rivet terminal 60 and the bottom 12 of the can housing. That is, since the rivet processing portion 65 is pressed toward the head 61 (upper side) after being spread in the centrifugal direction, the head 61 and the rivet processing portion 65 press the can housing 10 in the axial direction from opposite sides. Meanwhile, since the gasket 50 is interposed between the head 61 and the can housing 10 and between the rivet processing portion 65 and the can housing 10, the can housing 10 or the rivet terminal 60 may not be damaged even when the head 61 and the rivet processing portion 65 strongly press the can housing 10 in the axial direction.

Here, as the rivet processing portion 65 is pressed toward the bottom surface of the head 61, the distance G between the side surface S2 of the screw thread 64 facing axially inward and the side surface S1 of the restraining tapped portion 40 facing axially outward is reduced. Here, the portion of the gasket interposed between the side surface S2 of the screw thread 64 and the side surface S1 of the restraining tapped portion 40 is compressed. The head 61 and the rivet processing portion 65 strongly press the can housing 10 and the gasket 50 in the axial direction, and an axial compressive force is applied to the gasket 50 such that the can housing 10, the gasket 50, and the rivet terminal 60 may be firmly and tightly fixed in the axial and radial directions.

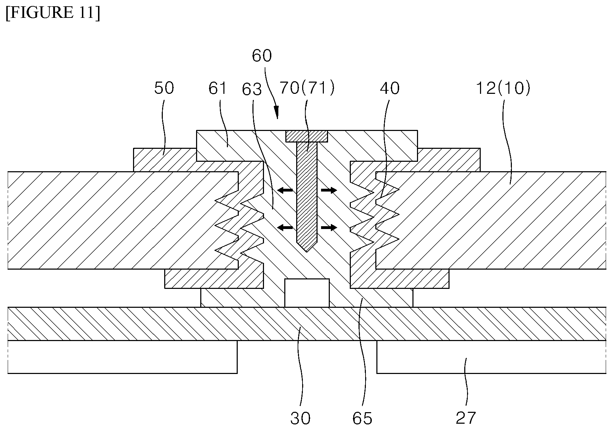

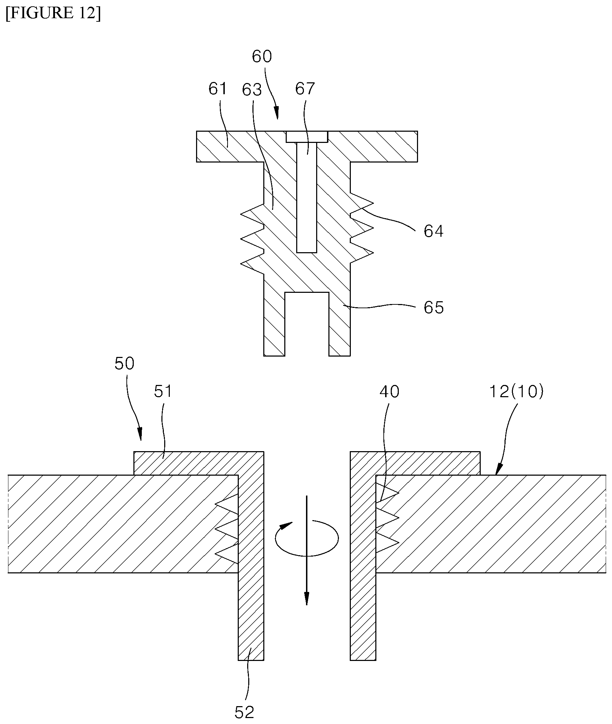

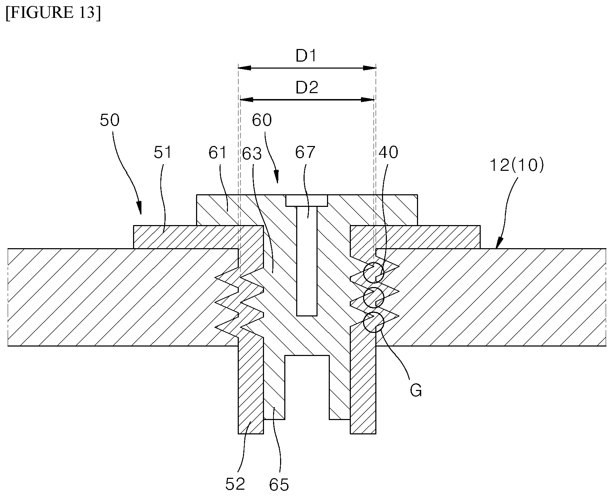

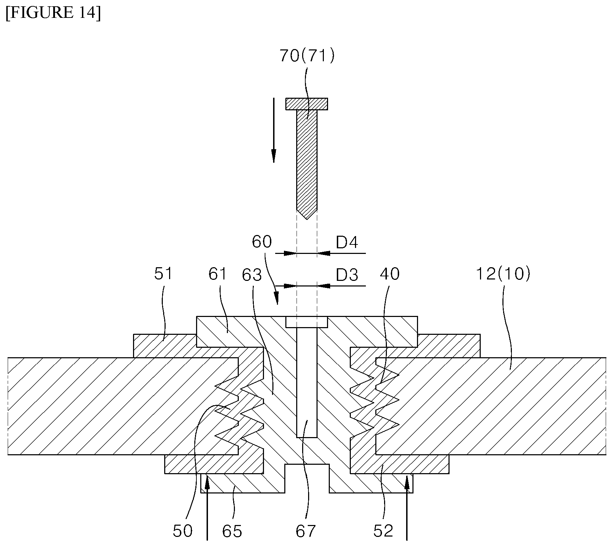

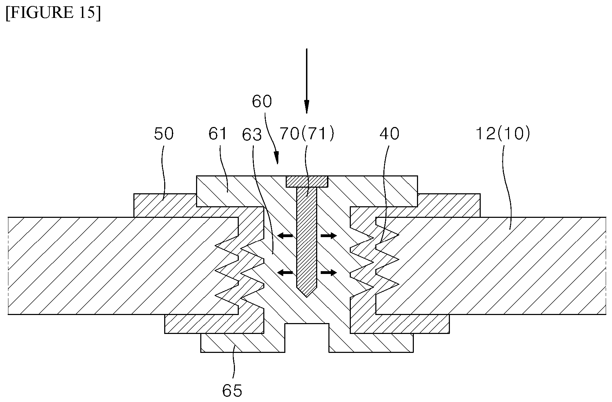

FIG. 11 is a cross-sectional view schematically illustrating one axial side of the battery cell according to a second embodiment of the present invention, FIG. 12 is a cross-sectional view schematically illustrating a rivet terminal inserted into the restraining tapped portion of a battery cell according to of the second embodiment the present invention, FIG. 13 is a cross-sectional view schematically illustrating a rivet terminal attached to the restraining tapped portion of FIG. 12, FIG. 14 is a cross-sectional view schematically illustrating an expansion member inserted into an expansion hole of the rivet terminal of FIG. 13, and FIG. 15 is a cross-sectional view schematically illustrating a rivet terminal expanding as an expansion member is inserted into the expansion hole of the rivet terminal of FIG. 14.

Referring to FIGS. 11 to 15, a battery cell 1 according to the second embodiment of the present invention may include: a restraining tapped portion 40; a gasket 50; a rivet terminal 60; and an expansion member 70.

The restraining tapped portion 40 may be provided in a circumferential direction on the inner circumferential surface of the rivet hole 14 of the can housing 10. A rivet hole 14 may be provided at the center of the bottom 12 of the can housing 10. The restraining tapped portion 40 has a shape of a screw thread 64 formed by tapping the inner circumferential surface of the rivet hole 14. The restraining tapped portion 40 may be annular along the circumferential direction on the inner circumferential surface of a rivet hole 14.

The gasket 50 may be fitted into and in contact with the inner circumferential surface of the rivet hole 14. The gasket 50 is made of an insulating material. The gasket 50 may be tubular to be inserted into the rivet hole 14, and a flange 51 may be provided at the axial end. According to the embodiment, the flange 51 may be provided at one axial end of the gasket 50. The flange 51 is a portion that is in contact with the outer surface of the can housing 10. The gasket 50 may be overall made of an elastic or flexible material.

The screw thread 64 may be provided on the outer circumferential surface of the rivet terminal 60, and the screw thread 64 may be inserted into the rivet hole 14 with the gasket 50 interposed therebetween. Accordingly, the gasket 50 may be interposed radially between the screw thread 64 provided on the outer circumferential surface of the rivet terminal 60 and the inner circumferential surface of the rivet hole 14. The outer diameter of the screw thread 64 may be larger than the internal diameter of the gasket 50 and slightly smaller than the outer diameter of the gasket 50. The rivet terminal 60 is inserted into the gasket 50 while being rotated. Here, the screw thread 64 pushes the gasket 50 in a centrifugal direction, and the gasket 50 is pushed into the restraining tapped portion 40 while being expanded (elongated) in the centrifugal direction by the screw thread 64. The centrifugal direction may be parallel to the radially outer side. The expansion member 70 is press-fitted into the rivet terminal 60. The expansion member 70 may include an expansion pin. As the expansion member 70 is press-fitted into the center of the insert portion 63, the diameter of the insert portion 63 expands such that the screw thread 64 of the insert portion 63 may move closer to the restraining tapped portion 40. Accordingly, the portion of the gasket 50 may be further compressed between the screw thread 64 and the restraining tapped portion 40, thereby further increasing the bonding strength between the rivet terminal 60 and the restraining tapped portion 40.

The screw thread 64 of the rivet terminal 60 is screw-fastened into the inner circumferential surface of the gasket 50, and the rivet terminal 60 may be deformed to cause the gasket 50 to protrude radially outward. Accordingly, the outer circumferential surface of the gasket 50 protruding radially outward may be deformed to fit tightly against the restraining tapped portion 40. According to another aspect of the present invention, it should be understood that the gasket 50 is fixed in a manner similar to screw-fastening to the restraining tapped portion 40 of the rivet hole, and the gasket 50 may be firmly fixed as when screwed into the restraining tapped portion 40. Since the rivet terminal 60 is screw-fastened to the gasket 50 and the gasket 50 is fastened to the restraining tapped portion 40 of the rivet hole 14 of the can housing 10 in a similar manner to that of being screw-fastened, the bonding strength and structural rigidity of the rivet terminal 60 may be significantly increased. Accordingly, the rivet terminal 60 or the gasket 50 may not be ejected or separated from the rivet hole 14. In addition, even when the ductility of the gasket 50 increases, the screw thread 64 of the rivet terminal 60 may be caught by the restraining tapped portion 40 and restrained in the axial direction.

Referring to FIGS. 11 to 15, the profile of the restraining tapped portion 40 of the rivet hole 14 and the profile of the screw thread 64 of the rivet terminal 60 may be oblique to the radial direction and the axial direction., and the profiles of the outer circumferential surface and the inner circumferential surface of the gasket 50 which is pressed between the restraining tapped portion 40 and the screw thread 64 may also be oblique to the radial direction and the axial direction. When the restraining force in the radial direction is applied to the gasket 50 or the rivet terminal 60 due to the oblique profiles in the radial and axial directions, the gasket 50 or the rivet terminal 60 may also be restrained in the axial direction. When the restraining tapped portion 40 of the rivet hole 14 supports the gasket 50 from the radially outer side, and the screw thread 64 of the rivet terminal 60 supports the gasket 50 from the radially inner side, and a radial compressive force may be applied to the gasket 50. Since the profiles of the outer circumferential surface and the inner circumferential surface of the gasket 50 are oblique to the radial and axial directions, the radial compressive force applied to the gasket 50 may restrain the gasket 50 in the radial and axial directions. In addition, since the profiles of the screw thread 64 of the rivet terminal 60 are oblique to the radial and axial directions, the radial compressive force applied to the rivet terminal 60 may restrain the rivet terminal 60 in the radial and axial directions. That is, the radial compressive force applied to the gasket 50 and the rivet terminal 60 not only firmly fix the rivet hole 14 to the gasket 50, and the gasket 50 to the rivet terminal 60 in the radial direction, but also firmly fix the same in the axial direction.

In addition, since the rivet terminal 60 is screw-fastened to the gasket 50, and the gasket 50 is screw-fastened to the restraining tapped portion 40 of the rivet hole 14 of the can housing 10 in a similar manner, the gasket 50 may be in contact with the rivet terminal 60 and the rivet hole 14 without any gaps. Since the gasket 50 is compressed in a screw-like manner between the screw thread 64 of the rivet terminal 60 and the restraining tapped portion 40, the sealing strength of the gasket 50 is significantly increased, preventing electrolyte leakage inflow of moisture..

In addition, during a side rupture test, the gasket 50 may have the ductility thereof increased by high temperature heat. However, since the gap between the screw thread 64 of the rivet terminal 60 and the restraining tapped portion 40 is in a zigzag shape in the axial direction, the screw thread 64 and the restraining tapped portion 40 are caught by each other in the axial direction, and the softened gasket 50 may be maintained in a state of being interposed between the screw thread 64 of the rivet terminal 60 and the restraining tapped portion 40. Specifically, the restraining tapped portion 40 of the rivet hole 14 and the outer circumferential surface of the gasket 50 are fastened in a manner similar to a screw-fastening, the gasket 50 is axially restrained to the rivet hole 14, the screw thread 64 of the rivet terminal 60 and the inner circumferential surface of the gasket 50 are screw-fastened, and the rivet terminal 60 may be axially restrained to the gasket 50. Accordingly, the rivet terminal 60 may be prevented from being ejected or detached from the terminal hole (rivet hole).

The battery cell according to the present invention may be included in at least one battery pack or battery module that accommodates a plurality of battery cells therein. In the battery pack or battery module, a structure for preventing internal gas discharge may be arranged to correspond to a vent of the battery cell. The vent of the battery cell may discharge internal gas to the outside. For example, the structure to prevent internal gas discharge may include a vent that discharges internal gas to the outside of the battery pack, a gas detection sensor, a blower fan, or a cooling module. For example, rivet terminals and vents of a plurality of battery cells may be arranged on one axial side and the opposite axial side, respectively, and a structure to prevent internal gas from discharging may be provided on the opposite axial side of the battery pack or the battery module that accommodates the plurality of the battery cells, and the structure to prevent internal gas from discharging may not be provided or may be provided in adequately on the one axial side of the battery pack or the battery module. When thermal runaway of the battery pack occurs, the rivet terminal 60 arranged on the upper side (one axial side) of the battery pack may be prevented from being ejected or detached from the rivet hole 14 of the can housing 10. Accordingly, since the structures protecting against gas discharge in the battery pack may sufficiently protect against internal gas discharged through the vents of the battery cells, the risk of fire or explosion may be significantly reduced.

In addition, in a battery pack or battery module, the rivet terminals 60 of a plurality of battery cells are connected by a tab, and the plurality of battery cells may be electrically interconnected. However, when the rivet terminal 60 is ejected or detached from the rivet hole 14 due to a cause such as thermal runaway, the tab fixed to the rivet terminal 60 may be damaged or destroyed. In a battery pack in which the tab is welded to the rivet terminal 60, the tab may be prevented from being damaged due to the rivet terminal 60 being ejected or detached from the can housing 10, thereby preventing the damage of the connecting tab from leading to damage to the battery pack.

The rivet terminal 60 may include: a head 61; an insert portion 63; and a rivet processing portion 65. The head 61, the insert portion 63, and the rivet processing portion 65 may be formed integrally.

The head 61 may have an outer diameter larger than the internal diameter of the rivet hole 14. The head 61 may be circular or polygonal. When the rivet terminal 60 is inserted into the rivet hole 14, the head 61 may be caught on the periphery of the rivet hole 14, preventing the rivet terminal 60 from being inserted any further.

The insert portion 63 may extend from the head 61, have a screw thread 64 provided on the outer circumferential surface thereof and include an expansion hole 67 into which the expansion member 70 is press-fitted. The insert portion 63 may have an overall cylindrical or circular pipe shape, and may be provided with a screw thread 64 on the outer circumferential surface thereof. The screw thread 64 may deform or expand the gasket 50 into a screw shape and fasten the same to the restraining tapped portion 40 in a screw-like manner.

When the expansion member 70 is press-fitted into the expansion hole 67, the insert portion 63 expands radially, thereby increasing the outer diameter of the insert portion 63. Accordingly, the gasket 50 is pressed more against the restraining tapped portion 40 such that the bonding strength and adhesion of the rivet terminal 60 may be further increased. In addition, the expansion member 70 provides additional radial compressive force and restraining force between the gasket 50 and the rivet hole 14 and between the gasket 50 and the rivet terminal 60 such that the gasket 50 may be more firmly fastened to the rivet hole 14 and the rivet terminal 60 in the radial direction, and may also be more firmly fastened in the axial direction.

The diameter D3 of the expansion hole 67 may be slightly smaller than the diameter D4 of the expansion member 70 (see FIG. 14). Accordingly, when the expansion member 70 is press-fitted into the expansion hole 67, the outer diameters of the insert portion 63 and the screw thread 64 are further increased such that the rivet terminal 60 is further pressed against the gasket 50, the gasket 50 is further pressed against the rivet hole 14, and the rivet terminal 60 and the gasket 50 may be firmly fixed to the rivet hole 14.

The rivet processing portion 65 may extend from the insert portion 63 and be bent radially outward. A plurality of rivet processing portions 65 may be provided along the circumferential direction at the opposite axial end (lower end) of the insert portion 63. Depending on the embodiment, a single rivet processing portion 65 may be provided. While being bent in the radial direction of the insert portion 63, the rivet processing portion 65 is caught on the periphery of the rivet hole 14, thereby preventing the rivet terminal 60 from being ejected or detached from the rivet hole 14.

The outer diameter D2 of the screw thread 64 of the rivet terminal 60 may be smaller than the internal diameter D1 of the rivet hole 14. Accordingly, as the rivet terminal 60 rotates, the rivet terminal 60 may be smoothly screw-fastened to the interior of the rivet hole 14, and the gasket 50 may be inserted between the rivet terminal 60 and the restraining tapped portion 40 in a compressed and tightly sealed state.

The lead of the screw thread 64 may correspond to that of the restraining tapped portion 40. The lead of the screw thread 64 may be defined as the distance between adjacent crests of the screw thread. The lead of the screw thread 64 may mean the pitch of the screw.

The distance G between the side surface S2 of the screw thread 64 facing axially inward (the opposite axial side) and the side surface S1 of the restraining tapped portion 40 facing axially outward (one axial side) may be reduced as the rivet processing portion 65 is pressed toward the bottom surface of the head 61 to compress the portion of the gasket 50 interposed therebetween (see FIG. 13). The gasket 50 is compressed in the axial direction, the gasket 50 is strongly restrained in the rivet hole 14 in the axial and radial directions, and the rivet terminal 60 is strongly restrained in the axial and radial directions by the gasket 50. Accordingly, the bonding and sealing strength of the screw thread 64 of the rivet terminal 60, the restraining tapped portion 40, and the gasket 50 may be significantly enhanced. Furthermore, electrolyte leakage is prevented, and moisture may not enter the battery cell even when the gasket 50 is deformed during high-temperature storage of the battery cell 1.

In the second embodiment, the bonding strength and adhesive force of the rivet terminal 60 and the restraining tapped portion 40 are increased by screw-fastening to the gasket 50 interposed therebetween, and the bonding strength and adhesive force may be further increased by press-fitting the expansion member 70 into the rivet terminal 60.

Referring to FIGS. 11 to 15, the crest 641 of the screw thread 64 of the rivet terminal 60 positioned radially inner than the crest 411 of the screw portion of the restraining tapped portion 40 is exemplified in the embodiment. However, referring to FIG. 18, the crest 641 of the screw thread 64 of the rivet terminal 60 may be positioned radially between the crest 411 and the root 412 of the screw portion of the restraining tapped portion 40. The operation and effect thereof may be understood as described with respect to the battery cell of the first embodiment.

A method for manufacturing a battery cell according to the second embodiment of the present invention as described above will be described.

A can housing 10 is prepared(see FIG. 12). At the center of the bottom 12 of the can housing 10, a rivet hole 14 provided with a restraining tapped portion 40 on the inner circumferential surface thereof in a circumferential direction is provided.

A gasket 50 is inserted into the rivet hole 14 of the can housing 10 in the axial direction. Here, the gasket 50 is inserted into the rivet hole 14 while being rotated in the circumferential direction. Unlike the embodiment, the gasket 50 may be inserted into the rivet hole 14 without being rotated. When the flange 51 of the gasket 50 comes into contact with the outer surface (one axial end surface) of the can housing 10, the insertion of the gasket 50 is stopped.

A rivet terminal 60 is prepared on the upper side (one axial side) of the can housing 10. The rivet terminal 60 includes a head 61; an insert portion 63 having a screw thread 64 on the outer circumferential surface thereof and an expansion hole 67 at the center; and a rivet processing portion 65 provided at the axially inner end of the insert portion 63.

With the gasket 50 inserted in the rivet hole 14, the rivet processing portion 65 and the insert portion 63 are inserted into the rivet hole 14 from axially outer side of the rivet hole 14 (see FIG. 13). The rivet terminal 60 is inserted into the rivet hole 14 while being rotated in the circumferential direction. Here, the screw thread 64 pushes the gasket 50 outward and expands the same radially outward such that the gasket 50 is pressed into the restraining tapped portion 40.

When the rivet terminal 60 is fully inserted into the rivet hole 14, the gasket 50 is interposed in a compressed state between the head 61 and the insert portion 63 of the rivet terminal 60. Since the flange 51 of the gasket 50 protrudes radially outer than the head 61 of the rivet terminal 60, and the opposite axial end 52 of the gasket 50 protrudes axially outer than the rivet processing portion 65 of the rivet terminal 60 in the opposite direction, the gasket 50 may electrically insulate the rivet terminal 60 and the bottom 12 of the can housing.

The rivet processing portion 65 is bent so as to spread the rivet processing portion 65 in the centrifugal direction, and the bent rivet processing portion 65 is pressed axially outward to further press the can housing 10 toward the bottom surface of the head 61 (see FIG. 14). As the rivet processing portion 65 is bent, the opposite axial end 52 of the gasket 50 may be bent radially outward. Since the opposite axial end 52 of the gasket 50 protrudes radially outer than the rivet processing portion 65 of the rivet terminal 60, the gasket 50 may electrically insulate the rivet terminal 60 and the bottom 12 of the can housing. That is, since the rivet processing portion 65 is pressed toward the head 61 (upper side) after being spread in the centrifugal direction, the head 61 and the rivet processing portion 65 press the can housing 10 in the axial direction from opposite sides. Meanwhile, since the gasket 50 is interposed between the head 61 and the can housing 10 and between the rivet processing portion 65 and the can housing 10, the can housing 10 or the rivet terminal 60 may not be damaged even when the head 61 and the rivet processing portion 65 strongly press the can housing 10 in the axial direction.

Here, as the rivet processing portion 65 is pressed toward the bottom surface of the head 61, the distance G between the side surface S2 of the screw thread 64 facing axially inward and the side surface S1 of the restraining tapped portion 40 facing axially outward is reduced. Here, the portion of the gasket interposed between the side surface S2 of the screw thread 64 and the side surface S1 of the restraining tapped portion 40 is compressed. The head 61 and the rivet processing portion 65 strongly press the can housing 10 in the axial direction, and an axial compressive force is applied to the gasket 50 such that the can housing 10, the gasket 50, and the rivet terminal 60 may be firmly and tightly fixed in the axial and radial directions.

An expansion member 70 is press-fitted into the expansion hole 67 of the rivet terminal 60 (see FIG. 15). Here, since the outer diameter of the insert portion 63 increases as the insert portion 63 expands radially, the bonding strength and the sealing strength between the rivet terminal 60 and the gasket 50 may be further enhanced. In addition, as the insert portion 63 expands radially, the outer diameter of the gasket 50 increases, and the bonding strength and the sealing strength between the gasket 50 and the rivet hole 14 may be further enhanced.

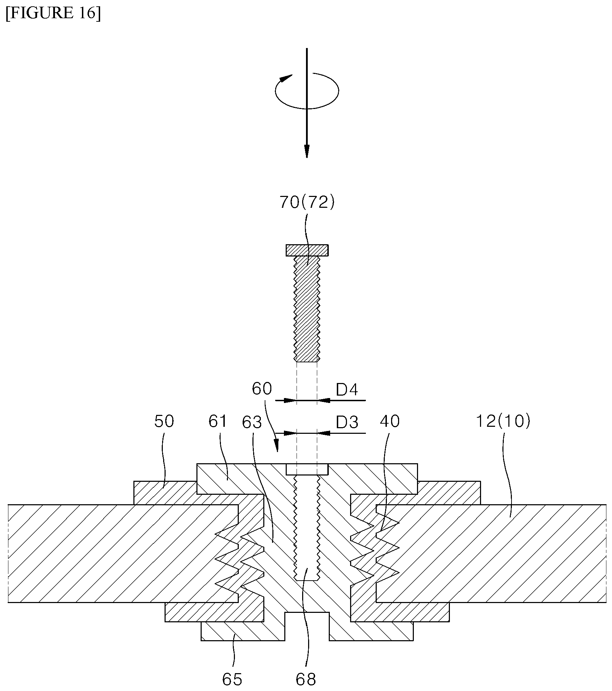

FIG. 16 is a cross-sectional view schematically illustrating one axial side of a battery cell according to a third embodiment of the present invention, and FIG. 17 is a cross-sectional view schematically illustrating a rivet terminal expanding as an expansion member is inserted into an expansion hole of the rivet terminal of FIG. 16.

Referring to FIGS. 16 and 17, a battery cell 10 according to a third embodiment of the present invention may include: a restraining tapped portion 40; a gasket 50; a rivet terminal 60; and an expansion member 70. Since the third embodiment is substantially identical to the second embodiment except for the portions related to the expansion member 70 and the expansion hole 67, the same reference numerals are assigned to the same elements and the descriptions thereof are omitted.

The expansion member 70 may be an expansion screw 72 having an expansion screw portion provided on the outer circumferential surface thereof. Here, a screw hole 68 may be provided at the center of the rivet terminal 60 for inserting the expansion screw 72. The diameter D4 of the expansion screw 72 may be slightly larger than the diameter D3 of the screw hole 68. The degree of expansion of the rivet terminal 60 may be controlled by adjusting the difference between the diameter D4 of the expansion screw 72 and the diameter D3 of the screw hole 68.

As the expansion member 70 is rotated and screwed into the screw hole 68, the outer diameter of the insert portion 63 of the rivet terminal 60 may increase. Accordingly, the insert portion 63 and the screw thread 64 may be expanded or moved closer to the restraining tapped portion 40. Since the insert portion 63 expands in the radial direction to increase the outer diameter of the insert portion 63, the bonding strength and sealing strength between the rivet terminal 60 and the gasket 50 may be further enhanced. In addition, as the insert portion 63 expands radially, the outer diameter of the gasket 50 increases, and the bonding strength and sealing strength between the gasket 50 and the rivet hole 14 may be further enhanced.

In the third embodiment, the bonding strength and adhesive force of the rivet terminal 60 and the restraining tapped portion 40 are increased by screw-fastening to the gasket 50 interposed therebetween, and the bonding strength and adhesive force may be further increased by press-fitting the expansion member 70 into the rivet terminal 60. In addition, since the expansion screw 72 is screw-fastened to the rivet terminal 60, the expansion screw 72 may be prevented from being detached from the rivet terminal 60.

Referring to FIGS. 16 and 17, the crest 641 of the screw thread 64 of the rivet terminal 60 positioned radially inner than the crest 411 of the screw portion of the restraining tapped portion 40 is exemplified in the embodiment. However, referring to FIG. 18, the crest 641 of the screw thread 64 of the rivet terminal 60 may be positioned radially between the crest 411 and the root 412 of the screw portion of the restraining tapped portion 40. The operation and effect thereof may be understood as described with respect to the battery cells of the first and second embodiments.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery cell comprising:
a restraining tapped portion provided in a circumferential direction on an inner circumferential surface of a rivet hole of a can housing;
a gasket fitted into the rivet hole and in contact with the inner circumferential surface of the rivet hole; and
a rivet terminal having a screw thread on an outer circumferential surface thereof, wherein the screw thread is inserted into the rivet hole with the gasket interposed therebetween.

2. The battery cell of claim 1, wherein the rivet terminal comprises:
a head having an outer diameter larger than an internal diameter of the rivet hole;
an insert portion extending from the head and having the screw thread provided on an outer circumferential surface thereof; and
a rivet processing portion extending from the insert portion and bent radially outward.

3. The battery cell of claim 2, wherein an outer diameter of the screw thread of the rivet terminal is smaller than the internal diameter of the rivet hole.

4. The battery cell of claim 2, wherein a lead of the screw thread corresponds to that of the restraining tapped portion.

5. The battery cell of claim 2, wherein a distance between a side surface of the screw thread facing axially inward and a side surface of the restraining tapped portion facing axially outward is reduced as the rivet processing portion is pressed toward the bottom surface of the head to compress a portion of the gasket interposed between the side surface of the screw thread facing axially inward and the side surface of the restraining tapped portion facing axially outward.

6. A battery cell comprising:
a restraining tapped portion provided in a circumferential direction on an inner circumferential surface of a rivet hole of a can housing;
a gasket fitted into the rivet hole and in contact with the inner circumferential surface of the rivet hole;
a rivet terminal having a screw thread on an outer circumferential surface thereof, wherein the screw thread is inserted into the rivet hole with the gasket interposed therebetween; and
an expansion member press-fitted into the rivet terminal.

7. The battery cell of claim 6, wherein the expansion member comprises an expansion pin.

8. The battery cell of claim 6, wherein the expansion member comprises an expansion screw having a screw portion provided on an outer surface thereof.

9. The battery cell of claim 6, wherein the rivet terminal comprises:
a head having an outer diameter larger than an internal diameter of the rivet hole;
an insert portion extending from the head, having the screw thread provided on an outer circumferential surface thereof, and provided with an expansion hole where the expansion member is press-fitted; and
a rivet processing portion extending from the insert portion and bent radially outward.

10. The battery cell of claim 9, wherein the expansion hole is parallel to a lengthwise direction of the insert portion.

11. The battery cell of claim 9, wherein an outer diameter of the screw thread of the rivet terminal is smaller than the internal diameter of the rivet hole.

12. The battery cell of claim 9, wherein a lead of the screw thread corresponds to that of the restraining tapped portion.

13. The battery cell of claim 9, wherein a distance between a side surface of the screw thread facing axially inward and a side surface of the restraining tapped portion facing axially outward is reduced as the rivet processing portion is pressed toward the bottom surface of the head to compress a portion of the gasket interposed between the side surface of the screw thread facing axially inward and the side surface of the restraining tapped portion facing axially outward.

14. A battery cell manufacturing method, comprising:
preparing a can housing having a rivet hole on an inner circumferential surface thereof, the rivet hole provided with a restraining tapped portion in a circumferential direction;
inserting a gasket into the rivet hole in an axial direction;
preparing a rivet terminal comprising: a head; an insert portion having a screw thread provided on an outer circumferential surface thereof; and a rivet processing portion provided at an axially inner end of the insert portion, and inserting the rivet processing portion and the insert portion into the rivet hole from an axially outer side of the rivet hole with a gasket is inserted in the rivet hole; and
pressing the rivet processing portion axially outward while centrifugally spreading the rivet processing portion to further pressing the can housing toward a bottom surface of the head.

15. The battery cell manufacturing method of claim 14, further comprising pressing an expansion member into the rivet terminal.

16. The battery cell manufacturing method of claim 15, wherein the expansion member comprises an expansion pin.

17. The battery cell manufacturing method of claim 15, wherein the expansion member comprises an expansion screw having a expansion screw portion provided on an outer surface thereof.

18. The battery cell manufacturing method of claim 14, wherein a distance between a side surface of the screw thread facing axially inward and a side surface of the restraining tapped portion facing axially outward is reduced as the rivet processing portion is pressed toward the bottom surface of the head to compress a portion of the gasket interposed between the side surface of the screw thread facing axially inward and the side surface of the restraining tapped portion facing axially outward.

19. The battery module of any one of claims 1 to 13, wherein the restraining tapped portion comprises a screw portion including a crest and a root, and
a crest of the screw thread of the rivet terminal is positioned radially inner than that of the screw portion of the restraining tapped portion.

20. The battery module of any one of claims 1 to 13, wherein the restraining tapped portion comprises a screw portion including a crest and a root, and
a crest of the screw thread of the rivet terminal is positioned radially between the crest and the root of the screw portion of the restraining tapped portion.
